# EUROPÄISCHE PATENTSCHRIFT

(11) **EP 4 516 533 B1**
(45) Veröffentlichungstag und Bekanntmachung des Hinweises auf die Patenterteilung: **13.05.2026**
(21) Anmeldenummer: 24193233.4
(22) Anmeldetag: 07.08.2024
(51) Int. Cl.: B60C 11/12, B60C 11/13

(54) **FAHRZEUGREIFEN**
VEHICLE TYRE
BANDAGE PNEUMATIQUE POUR VÉHICULES

(30) Priorität: 04.09.2023 DE 102023208481
(43) Veröffentlichungstag der Anmeldung: 05.03.2025
(73) Patentinhaber: Continental Reifen Deutschland GmbH, 30175 Hannover (DE)
(72) Erfinder: Özüduru, Ahmet, 30175 Hannover (DE); Soyyuece, Atakan, 30175 Hannover (DE); Ecke, Stefan, 30175 Hannover (DE)
(74) Vertreter: Continental Corporation

(56) Entgegenhaltungen:
- EP-B1- 2 660 078
- DE-A1- 102005 013 810
- US-A1- 2008 053 584
- US-A1- 2008 053 585
- US-B1- 6 220 321

## Beschreibung

Die Erfindung betrifft einen Fahrzeugreifen gemäß dem Oberbegriff des Anspruches 1.

Fahrzeugreifen, insbesondere Fahrzeugluftreifen, weisen herkömmlicherweise in Umfangsrichtung verlaufende Profilblockreihen auf, die durch mehrere in Umfangsrichtung verlaufende Umfangsrillen (zentrale Umfangsrille, schulterseitige Umfangsrillen) voneinander getrennt sind. In die Umfangsrillen münden beispielsweise v-förmig bzw. angewinkelt in Querrichtung verlaufende Querrillen ein, die die Profilblockreihen zusätzlich in die einzelnen Profilblöcke unterteilen. Dadurch wird ein bestimmtes Reifenprofil ausgebildet.

Für eine gute Schneeperformance eines Reifenprofils kommt es insbesondere auf zwei Eigenschaften an: Erstens auf Schnee-Schnee-Reibung, d.h. Reibung zwischen dem im Reifenprofil gehaltenen Schnee und der Schneeschicht auf der Fahrbahn, und zweitens dem erhalten durch eine Einlaufkante eines Profilblocks (einlaufende Blockkante eines Profilblocks), wobei sich die Einlaufkante im Betrieb des Fahrzeugreifens in die Reifenaufstandsfläche eindreht.

Für beide Eigenschaften ist es von Vorteil, wenn sich speziell die Querrillen beim Eindrehen in die Reifenaufstandsfläche weit öffnen. Dadurch bietet die einlaufende Blockkante durch einen größeren sogenannten Freiwinkel ein besseres Fräsverhalten. Zudem kann durch eine sich weit geöffnete Querrille mehr Schnee in der jeweiligen Querrille aufgenommen werden, wodurch die Schnee-Schnee-Reibung verbessert wird.

In DE 10 2019 217 439 A1 ist beschrieben, in den Querrillen Grundanhebungen (Erhebungen, "tie-bar") mit variierender Tiefe bzw. Höhe anzuordnen, durch die eine Rillentiefe der Querrillen lokal verringert wird. In den einzelnen Grundanhebungsteilen sind auf einer Deckfläche parallel zueinander zwei durch einen Steg voneinander getrennte Nuten ausgebildet, welche übereinstimmend beabstandet zu den Rillenflanken der jeweiligen Querrille angeordnet sind. Die Nuten dienen dabei als zusätzliche Schneetaschen und stellen zusätzliche Griffkanten zur Verfügung. In die Nuten kann beim Fahren auf Schnee oder Schneematsch Schnee hineingedrückt und verdichtet werden, wodurch sich verbesserte Traktionseigenschaften erzielen lassen. Zusätzliche in Umfangsrichtung ausgedehnte und an die Grundanhebungsteile angrenzende Vertiefungen bilden zusätzliche Schneetaschen aus, um den Effekt der Schnee-Schnee-Reibung zu verbessern.

Nachteilig dabei ist, dass die in Querrichtung verlaufenden Nuten lediglich oberflächlich in dem jeweiligen Grundanhebungsteil ausgebildet sind. Das jeweilige Grundanhebungsteil, das die beiden an die Querrille in Umgangsrichtung angrenzenden mittleren oder schulterseitigen Profilblöcke auch über einen Rillengrund hinaus aneinander anbindet, ermöglicht zwar eine erhöhte Profilsteifigkeit, u.a. für das Trockenbremsen, verhindert aber auch, dass sich die jeweilige Querrille weit öffnen kann. Dadurch wird der Freiwinkel der einlaufenden Profilblockkante verringert und ein schlechteres Fräsverhalten erzielt. Zudem kann durch das geringere Öffnen der Querrille weniger Schnee in der Querrille aufgenommen werden, so dass sich eine Verschlechterung des Effektes der Schnee-Schnee-Reibung ergibt.

In US 11,161,375 B2 sieht einen Anbindungssteg mit einem lamellenartigen Einschnitt vor, der sich in denjenigen Querrillen, die in eine der zentralen Umfangsrillen einmünden, lediglich in deren mittleren Bereich befinden. In denjenigen Querrillen, die in eine der schulterseitigen Umfangsrillen einmünden, kann der Anbindungssteg mit dem lamellenartigen Einschnitt auch in einem der schulterseitigen Umfangsrille benachbarten Endbereich der jeweiligen Querrille liegen. Durch die lamellenartig eingeschnittenen Anbindungsstege in den Querrillen wird im Zusammenspiel mit weiteren speziell angeordneten lamellenartigen Einschnitten in den Profilblöcken die Lenkstabilität auf trockener Fahrbahn und gleichzeitig auch das Verhalten bei Schnee- und Eis in einem guten Gleichgewicht gehalten.

DE 10 2015 214 483 A1 beschreibt einen Fahrzeugreifen mit einer schulterseitigen Profilblockreihe, die laufstreifeninnenseitig durch eine schulterseitige Umfangsrille begrenzt wird. In die schulterseitige Umfangsrille münden im Wesentlichen parallel zueinander verlaufende Querrillen ein, wobei jede dieser Querrillen durch einen Rillengrund und zwei Rillenflanken begrenzt ist. Jede dieser Querrillen weist innerhalb der Bodenaufstandsfläche mindestens zwei aneinander anschließende Rillenabschnitte unterschiedlicher Tiefe auf, wobei die Tiefe der Rillenabschnitte stufenweise Richtung Laufstreifenrand zunimmt. Dadurch sollen Air-Pump-Geräusche, die in den schulterseitigen Bereichen des Laufstreifens dadurch entsteht, dass Luft durch die Querrillen hindurchgepresst wird, verringert werden.

Das Verringern der Air-Pump-Geräusche wird in EP 2 660 078 B1 dadurch erreicht, dass in den Querrillen, die in die schulterseitigen Umfangsrillen einmünden, Anbindungsstege ("tie bar") mit lamellenartigen Feinschnitten bzw. Einschnitten vorgesehen sind. Dadurch kann sich die Querrille vor den schulterseitigen Umfangsrillen öffnen, so dass die Luft in den Querrillen entweichen kann. Ferner ist der in die zentrale Umfangsrille einmündende Teil der Querrillen eingeengt, so dass zwischen den Profilblöcken kein Schneefang über Schneetaschen oder dergleichen ausgebildet wird. Bei diesem Fahrzeugreifen ergibt sich also keine Verbesserung der Schnee-Schnee-Reibung.

In DE 10 2005 013 810 A1 ist ein Fahrzeugreifen beschrieben, der in Querrillen, die in schulterseitige Umfangsrillen einmünden, jeweils einen Anbindungssteg aufweist, der benachbarte schulterseitige Profilblöcke des Fahrzeugreifens in Umfangsrichtung über die jeweilige Querrille miteinander verbindet bzw. aneinander anbindet. In dem Anbindungssteg ist ein Einschnitt mit einem Zickzackabschnitt ausgebildet, der sich in Rillenmittelrichtung der jeweiligen Querrille erstreckt. Der Einschnitt ist dreidimensional ausgebildet, wobei Einschnittswandoberflächen wiederholt dreidimensional vertieft und vorstehend ausgebildet sind. Dadurch, dass die vertieften Abschnitte und die vorstehenden Abschnitte ineinander eingreifen können, kann im Schulterbereich des Laufstreifens eine hohe Widerstandskraft nicht nur gegen die Kraft in Umfangsrichtung, sondern auch gegen die seitliche Kraft erreicht werden. Damit ist es möglich, die Bewegung des Anbindungsstegs effizient zu unterdrücken, insbesondere die Bewegung in seitlicher Richtung, wodurch die Erzeugung von Verformungen am Einschnittsboden im stark beanspruchten Schulterbereich minimiert und das Auftreten von Rissen vom Einschnittsboden verhindert werden kann.

Weitere Fahrzeugreifen mit Querrillen mit Erhebungen, die eingeschnitten sind, sind beispielsweise in US 2008/053584 A1, US 6 220 321 B1 und US 2008/053585 A1 beschrieben.

Der folgenden Erfindung liegt die Aufgabe zugrunde, einen Fahrzeugreifen bereitzustellen, mit dem in einfacher Weise eine gute Schneeperformance und gleichzeitig eine hohe Profilsteifigkeit für den Betrieb auf einer trockenen Fahrbahn bereitgestellt werden kann.

Diese Aufgabe wird durch einen Fahrzeugreifen gemäß dem unabhängigen Anspruch gelöst. Die Unteransprüche geben bevorzugte Weiterbildungen an.

Demnach ist ein Fahrzeugreifen mit einem Laufstreifen vorgesehen, wobei der Laufstreifen mindestens eine in Umfangsrichtung verlaufende Profilblockreihe aufweist, wobei die mindestens eine Profilblockreihe durch Querrillen in mehrere Profilblöcke unterteilt ist, wobei die Querrillen jeweils angewinkelt zu einer Querrichtung in eine Erstreckungsrichtung verlaufen. In der jeweiligen Querrille ist eine Erhebung aus mindestens zwei Erhebungsteilen angeordnet, wobei die Erhebungsteile in Erstreckungsrichtung der Querrille aneinander angrenzen. Eine Rillentiefe eines Rillengrundes der jeweiligen Querrille ist im Bereich der Erhebung zumindest bereichsweise gegenüber einer Basistiefe der jeweiligen Querrille verringert, wobei die Erhebung in Erstreckungsrichtung der jeweiligen Querrille eingeschnitten ist, so dass sich eine Lamelle mit einem Lamellengrund auf einer Lammellengrundtiefe ausbildet, wobei sich die Lamelle in Erstreckungsrichtung über sämtliche Erhebungsteile der Erhebung erstreckt.

Vorteilhafterweise wird also durch die Erhebung eine mehrfach abgestufte Rillentiefe erzeugt, wobei die Erhebung die beiden in Umfangsrichtung angrenzenden Profilblöcke nicht wie im Stand der Technik aneinander anbindet. Vielmehr wird durch die Lamelle ermöglicht, dass sich die jeweilige Querrille trotz der darin eingebrachten Erhebung weit öffnen kann, so dass sich eine Einlaufkante bzw. eine einlaufende Blockkante des an die jeweilige Querrille in Umfangsrichtung angrenzenden Profilblocks stärker eindrehen kann. Dadurch verbessert sich das Fräsverhalten.

Gleichzeitig kann durch das weite Öffnungsvermögen der jeweiligen Querrille mehr Schnee in dieser Querrille eingefangen werden, der dann durch den mehrfach abgestuften Rillengrund sowie optional auch durch zusätzliche Vertiefungen optimal in der Querrille gehalten werden kann. Die Schnee-Schnee-Reibung kann also bei gutem Fräsverhalten verbessert werden.

Gleichzeitig kann auch ohne die direkte Anbindung benachbarter Profilblöcke über die Erhebung eine hohe Profilsteifigkeit für das Trockenbremsen erreicht werden, da sich beide Profilblöcke auch weiterhin über die durch die Lamelle geteilte Erhebung aneinander abstützen können. Dies wird insbesondere dadurch verbessert, dass eine Lamellenbreite der Lamelle zwischen 0.5mm und 2mm beträgt, vorzugsweise zwischen 0.6mm und 0.8mm. Im Betrieb des Fahrzeugreifens können sich die Profilblöcke über die Erhebung also bereits bei einer sehr geringen Verformung gegeneinander abstützen.

Dies ist insbesondere dann vorteilhaft, wenn die Profilblockreihe eine mittlere Profilblockreihe ist und die Querrillen mittlere Querrillen sind, wobei der Laufstreifen mindestens eine zentrale Umfangsrille und schulterseitige Umfangsrillen aufweist, wobei die schulterseitigen Umfangsrillen in Querrichtung zu beiden Seiten versetzt bzw. beabstandet zu der mindestens einen zentralen Umfangsrille in Umfangsrichtung verlaufen, wobei sich die mindestens eine zentrale Umfangsrille benachbart zu einer Äquatorialebene des Fahrzeugreifens, vorzugsweise entlang der Äquatorialebene, in Umfangsrichtung erstreckt. Zwischen der zentralen Umfangsrille und der jeweiligen schulterseitigen Umfangsrille ist jeweils die in Umfangsrichtung verlaufende mittlere Profilblockreihe angeordnet, wobei die jeweilige mittlere Profilblockreihe durch die mittleren Querrillen in mittlere Profilblöcke unterteilt ist. Die mittleren Querrillen verlaufen jeweils angewinkelt zu der Querrichtung in die Erstreckungsrichtung und münden jeweils mit einem zentralseitigen Ende in die jeweilige zentrale Umfangsrille und mit einem schulterseitigen Ende in die jeweilige schulterseitige Umfangsrille. Die mittleren Querrillen verlaufen dabei vorzugsweise jeweils in einem Winkel von zwischen 30° und 55° angewinkelt zu der Querrichtung und vorzugsweise auch parallel zueinander. Die eingeschnittene Erhebung aus den mehreren Erhebungsteilen mit der Lamelle ist bei dieser Ausführung in einem zentralseitigen Endbereich der mittleren Querrille angeordnet, wobei sich der zentralseitige Endbereich an das zentralseitige Ende der mittleren Querrille unmittelbar anschließt bzw. dieses mit umfasst. An dieser Stelle ist die Ausführung der Tie-Bars bzw. der Erhebungen mit einer Lamelle besonders effektiv.

Vorzugsweise ist weiterhin vorgesehen, dass der Lamellengrund über sämtliche Erhebungsteile auf einer konstanten Lamellengrundtiefe verläuft. Dadurch wird ein gleichmäßiges Öffnen der Querrille und ein gleichmäßiges Abstützen benachbarter Profilblöcke erreicht und die Fertigung wird vereinfacht.

Vorzugsweise ist weiterhin vorgesehen, dass die Lamellengrundtiefe des Lamellengrundes zumindest 80% der Basistiefe, vorzugsweise zumindest 90% der Basistiefe, entspricht, insbesondere mit der Basistiefe identisch ist, wobei die Basistiefe zwischen 60% und 100%, bevorzugt zwischen 70% und 80 %, einer vollen Profiltiefe des Laufstreifens entspricht. Die Lamelle ragt also sehr tief in die jeweilige Erhebung hinein und geht insbesondere auch stufenlos in den Rillengrund neben der Erhebung über, wodurch Verspannungen vermieden und ein weites Öffnen der jeweiligen Querrille gewährleistet werden kann.

Vorzugsweise ist weiterhin vorgesehen, dass die Lamelle die Erhebung mittig teilt. Dadurch ist eine hohe Festigkeit und Stabilität sowie eine einfache Herstellung sowie (in Umfangsrichtung) auf beiden Seiten der Lamelle ein guter Halt von Schnee oberhalb der Erhebung bzw. oberhalb deren Deckflächen gegeben.

Vorzugsweise ist weiterhin vorgesehen, dass in Erstreckungsrichtung zwischen den einzelnen Erhebungsteilen der Erhebung jeweils in Umfangsrichtung verlaufende nutartige Vertiefungen ausgebildet sind. Diese dienen als zusätzliche Schneetaschen und können den eingefangenen Schnee zusätzlich in der jeweiligen Querrille halten.

Erfindungsgemäß ist weiterhin vorgesehen, dass die Erhebung in Erstreckungsrichtung der jeweiligen Querrille zumindest ein laufstreifeninnenseitiges Erhebungsteil, ein mittleres Erhebungsteil und ein laufstreifenaußenseitiges Erhebungsteil aufweist. Demnach ist zumindest eine Unterteilung in drei Erhebungsteile oder Erhebungsbereiche vorgesehen, so dass eine zumindest dreistufige Variation der Rillentiefe vorgesehen ist, um den Schnee optimal in der mittleren Querrille zu halten.

Dies führt erfindungsgemäß dazu, dass
- sich über dem laufstreifeninnenseitigen Erhebungsteil eine laufstreifeninnenseitige Rillentiefe ergibt,
- sich über dem mittleren Erhebungsteil eine mittlere Rillentiefe ergibt, und
- sich über dem laufstreifenaußenseitigen Erhebungsteil eine laufstreifenaußenseitige Rillentiefe ergibt

wobei die laufstreifeninnenseitige Rillentiefe, die mittlere Rillentiefe und die laufstreifenaußenseitige Rillentiefe jeweils geringer als die Basistiefe der jeweiligen Querrille sind, und
wobei die mittlere Rillentiefe geringer als die laufstreifeninnenseitige Rillentiefe und die laufstreifenaußenseitige Rillentiefe ist.

Durch die Erhebung wird also zu beiden Seiten des mittleren Erhebungsteils hin eine absteigende Flanke und eine ansteigende Flanke ausgebildet, wodurch der eingefangene Schnee optimal in der jeweiligen Querrille gehalten werden kann Ergänzend kann vorgesehen sein, dass die laufstreifeninnenseitige Rillentiefe und die laufstreifenaußenseitige Rillentiefe identisch sind, so dass sich zu beiden Seiten hin ein symmetrischer Verlauf ergibt.

Vorzugsweise ist weiterhin vorgesehen, dass die Lamelle in Umfangsrichtung durch parallel zueinander verlaufende Lamellenseitenwände begrenzt ist, die in Erstreckungsrichtung der jeweiligen Querrille über sämtliche Erhebungsteile verlaufen, wobei die Lamellenseitenwände nicht-planar sind und dreidimensional vertieft und hervorstehend ausgebildet sind, z.B. durch eine Ausbauchung, oder vorzugsweise auch wiederholt dreidimensional vertieft und hervorstehend, z.B. wellenartig oder zickzackartig. Dadurch können Querkräfte auf die Profilblöcke effizient abgefangen und dadurch ein Verschieben gegeneinander in Querrichtung minimiert werden.

Im Rahmen der Erfindung wird dabei unter zentralseitig oder laufstreifeninnenseitig verstanden, dass das jeweilige Element am jeweiligen Bauteil zur Äquatorialebene hin bzw. nach innen bzw. zur zentralen Umfangsrille hin ausgerichtet ist. Schulterseitig oder laufstreifenaußenseitig bedeutet dementsprechend eine Ausrichtung nach außen zur Laufstreifenaußenseite bzw. zu einer Reifenschulter des Fahrzeugreifens hin.
- Fig. 1: einen Ausschnitt eines Reifenprofils eines Fahrzeugreifens;
- Fig. 2: eine Detailansicht einer mittleren Querrille, die in eine zentrale Umfangsrille des Reifenprofils gemäß Fig. 1 einmündet; und
- Fig. 3: eine Schnittansicht entlang der mittleren Querrille gemäß Fig. 2.

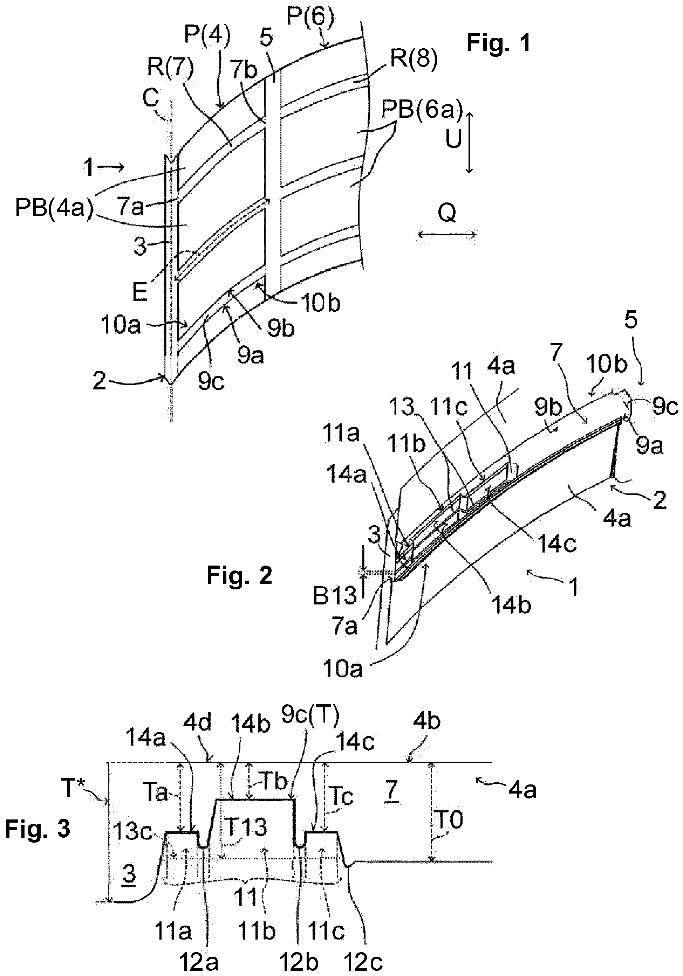

Figur 1 zeigt schematisch einen Ausschnitt eines Laufstreifens 1 eines Fahrzeugreifens 2, insbesondere Fahrzeugluftreifens, wobei lediglich eine Laufstreifenhälfte dargestellt ist. Die nicht dargestellte Laufstreifenhälfte ist vergleichbar dazu aufgebaut, vorzugsweise spiegelsymmetrisch dazu. Das dargestellte Reifenprofil des Laufstreifens 1 wird dadurch ausgebildet, dass entlang der Äquatorialebene C des Fahrzeugreifens 1 eine in der Draufsicht lineare und in Umfangsrichtung U verlaufende zentrale Umfangsrille 3 vorgesehen ist. Alternativ können auch zwei zentrale Umfangsrillen vorgesehen sein (nicht dargestellt), die parallel und beabstandet zueinander benachbart zur Äquatorialebene C liegen. An diese zentrale(n) Umfangsrille(n) 3 grenzt in Querrichtung Q eine mittlere Profilblockreihe 4 an, die von ihrer anderen Seite von einer schulterseitigen Umfangsrille 5 begrenzt wird. An die schulterseitige Umfangsrille 5 grenzt dann eine schulterseitige Profilblockreihe 6 an.

Zwischen der zentralen Umfangsrille 3 und der schulterseitigen Umfangsrille 5 verlaufen parallel zueinander mittlere Querrillen 7, die die mittlere Profilblockreihe 4 in mittlere Profilblöcke 4a unterteilt. Die mittleren Querrillen 7 münden dabei mit ihren zentralseitigen Enden 7a in die zentrale Umfangsrille 3 und mit ihren schulterseitigen Enden 7b in die schulterseitige Umfangsrille 5 ein. Dabei verlaufen die mittleren Querrillen 7 in Querrichtung Q v-förmig oder angewinkelt zwischen den beiden Umfangsrillen 3, 5.

In vergleichbarer Weise wird die schulterseitige Profilblockreihe 6 durch schulterseitige Querrillen 8 in schulterseitige Profilblöcke 6a unterteilt, wobei die schulterseitigen Querrillen 8 in Querrichtung Q von außen (laufstreifenaußenseitig) in die schulterseitige Umfangsrille 5 münden. Die schulterseitigen Querrillen 8 verlaufen von der schulterseitigen Umfangsrille 5 ausgehend in Querrichtung Q ebenfalls v-förmig oder angewinkelt zur Laufstreifenaußenseite hin, wobei die schulterseitigen Querrillen 8 in der dargestellten Ausführungsform weniger stark gegenüber der Querrichtung Q angewinkelt sind als die mittleren Querrillen 7. Für die mittleren Querrillen 7 kann beispielweise eine Anwinkelung von 30° bis 55°, insbesondere von zumindest 45°, vorgesehen sein und für die schulterseitigen Querrillen 7 von zwischen 5° bis 20°.

Grundsätzlich wäre es auch möglich, dass sich in dem Laufstreifen 1 keine Umfangsrillen (oder keine zentralen Umfangsrillen) befinden (nicht dargestellt) und sich der Laufstreifen 1 daher aus in Umfangsrichtung U verlaufenden Profilblockreihen P zusammensetzt, die durch gegenüber der Querrichtung Q angewinkelte Querrillen R in einzelne Profilblöcke PB unterteilt sind. Die nachfolgende Beschreibung basiert auf den mittleren Querrillen 7, wie beschrieben, ist aber auf einen Laufstreifen 1 ohne (zentrale) Umfangsrillen 3, 5 entsprechend übertragbar.

Die mittleren Querrillen 7 sind durch zwei Rillenflanken 9a, 9b und einen Rillengrund 9c begrenzt, die einen im Wesentlichen u-förmigen Verlauf ausbilden, wobei die Rillenflanken 9a, 9b auch leicht gegenüber der Vertikalen verkippt sein können. Der Rillengrund 9c der jeweiligen mittleren Querrille 7 ist in einem zentralseitigen Endbereich 10a, der näher an dem zentralseitigen Ende 7a der mittleren Querrille 7 liegt und in der dargestellten Ausführungsform auch das zentralseitige Ende 7a mit einschließt, in Erstreckungsrichtung E der mittleren Querrille 7 abgestuft, wie in der Detailansicht in Fig. 2 und dem Höhenprofil in Fig. 3 dargestellt. Dadurch ergibt sich in dem zentralseitigen Endbereich 10a lokal eine Variation einer Rillentiefe T (Tiefe ab Oberfläche 4c des mittleren Profilblocks 4a bis zum Rillengrund 9c) der mittleren Querrille 7.

Die Abstufung des Rillengrundes 9c ist dabei derartig gewählt, dass sich die Rillentiefe T ausgehend von einer Basistiefe TO des Rillengrundes 9c lokal verringert. Der Rillengrund 9c verläuft dabei abseits des zentralseitigen Endbereiches 10a in einem nicht-abgestuften Bereich, beispielsweise auch in einem schulterseitigen Endbereich 10b der mittleren Querrille 7, auf dieser Basistiefe T0. Die Basistiefe TO liegt dabei nicht zwangsläufig auf der sog. vollen Profiltiefe T*, die normalerweise am tiefsten Punkt in den Umfangsrillen 3, 5 vorliegt.

Im Rillengrund 9c wird also lokal eine Erhebung 11, auch als "Tie-Bar" bezeichnet, wie folgt ausgebildet. So ist in den mittleren Querrillen 7 ausgehend von der zentralen Umfangsrille 3, die auf der vollen Profiltiefe T* (Tiefe ab Oberfläche 4c des mittleren Profilblocks bis zum Rillengrund der zentralen Umfangsrille 3) verläuft, zunächst ein laufstreifeninnenseitiges Erhebungsteil 11a mit einer im Wesentlichen horizontal verlaufenden laufstreifeninnenseitigen Deckfläche 14a angeordnet, so dass sich zunächst eine laufstreifeninnenseitige Rillentiefe Ta (Abstand zwischen 4c und 14a) ergibt, die geringer ist als die Basistiefe T0. Über eine lokale erste Vertiefung 12a (Nut) geht die Erhebung 11 in ein mittleres Erhebungsteil 11b mit einer im Wesentlichen horizontal verlaufenden mittleren Deckfläche 14b über, das ausgehend von der laufstreifeninnenseitigen Rillentiefe Ta zu einer Reduzierung der Rillentiefe T auf eine mittlere Rillentiefe Tb (Abstand zwischen 4c und 14b) führt. Das mittlere Erhebungsteil 11b kann auch noch weiter unterteilt sein, um eine zusätzliche Abstufung der Erhebung 11 zu erreichen.

Über eine lokale zweite Vertiefung 12b (Nut) geht die Erhebung 11 anschießend in ein laufstreifenaußenseitiges Erhebungsteil 11c mit einer im Wesentlichen horizontal verlaufenden laufstreifenaußenseitigen Deckfläche 14c über, das zu einem Erhöhen der Rillentiefe T auf eine laufstreifenaußenseitige Rillentiefe Tc (Abstand zwischen 4c und 14c) führt, die im dargestellten Ausführungsbeispiel der laufstreifeninnenseitigen Rillentiefe Ta entspricht und die damit ebenfalls geringer als die Basistiefe TO ist. Grundsätzlich können die laufstreifeninnenseitige Rillentiefe Ta und die laufstreifenaußenseitige Rillentiefe Tc auch unterschiedlich sein, solange gilt TO > Ta, Tc > Tb. Daran schließt sich eine lokale dritte Vertiefung 12c (Nut) an und anschließend (oder bereits vor der dritten Vertiefung 12c) endet die Erhebung 11, d.h. die mittlere Querrille 7 bzw. der Rillengrund 9c verläuft auf der Basistiefe TO weiter. Der Rillengrund 9c der mittleren Querrille 7 verläuft also im Bereich der Erhebung 11 zwischen den Rillentiefen Ta, Tb, Tc und abseits der Erhebung 11 auf der Basistiefe T0. Ist keine zentrale Umfangsrille 3 vorhanden, ist das laufstreifeninnenseitige Erhebungsteil 11a entsprechend an dem zentralseitigen oder laufstreifeninnenseitigen Ende der jeweiligen Querrille R angeordnet und die weiteren Erhebungsteile 11b, 11c folgen in laufstreifenaußenseitiger Richtung.

Die ausgebildeten Vertiefungen 12a, 12b, 12c verlaufen innerhalb der mittleren Querrille 7 in die Umfangsrichtung U und dienen im Betrieb des Fahrzeugreifens 2 als Schneetaschen zur Aufnahme und zum Halten von Schnee.

Die Erhebung 11, die durch die jeweiligen Erhebungsteile 11a, 11b, 11c ausgebildet wird, ist ferner wie in Fig. 2 dargestellt in der Mitte bzw. entlang der Erstreckungsrichtung E der mittleren Querrille 7 geteilt bzw. eingeschnitten. Damit werden auch die jeweiligen im Wesentlichen horizontal verlaufenden Deckflächen 14a, 14b, 14c geteilt. Eine dadurch in der Erhebung 11 ausgebildete Lamelle 13 wird in Umfangsrichtung U durch parallel zueinander liegende Lamellenseitenwände 13a, 13b begrenzt, die in Erstreckungsrichtung E der mittleren Querrille 7 über sämtliche Erhebungsteile 11a, 11b, 11c und auch die daran angrenzenden Vertiefungen 12a, 12b, 12c verlaufen. Eine Lamellenbreite B13 (Abstand der Lamellenseitenwände 13a, 13b) beträgt dabei zwischen 0.5mm und 2mm. Die Lamellenseitenwände 13a, 13b können dabei planar ausgebildet sein oder aber nicht-planar, beispielsweise in komplementärer Weise (wiederholt) dreidimensional vertieft und hervorstehend. Dadurch wird vermieden, dass sich die Lamellenseitenwände 13a, 13a bei auftretenden Querkräften in Querrichtung Q (zu stark) gegeneinander verschieben.

Die Lamelle 13 erstreckt sich vorzugsweise bis zur Basistiefe TO oder geringfügig darüber, wie in Fig. 3 angedeutet. Ein Lamellengrund 13c liegt also auf einer Lamellengrundtiefe T13 (Tiefe ab Oberfläche 4c des mittleren Profilblocks 4a), die der Basistiefe TO oder zumindest 80% der Basistiefe TO, insbesondere zumindest 90% der Basistiefe TO entspricht. Da zwei in Umfangsrichtung U aufeinanderfolgende mittlere Profilblöcke 4a durch die Erhebung 11 nicht mehr über die mittlere Querrille 7 hinweg aneinander angebunden sind, kann sich die mittlere Querrille 7 im Betrieb des Fahrzeugreifens 2 weit öffnen. Dadurch kann sich eine Einlaufkante 4b (einlaufende Blockkante) des an die mittlere Querrille 7 in Umfangsrichtung U angrenzenden mittleren Profilblocks 4a im Betrieb des Fahrzeugreifens 2 stärker eindrehen, wodurch sich das Fräsverhalten verbessert.

Gleichzeitig kann durch das weite Öffnungsvermögen der mittleren Querrille 7 mehr Schnee in dieser mittleren Querrille 7 eingefangen werden, das dann durch den mehrfach abgestuften Rillengrund 9c sowie die Vertiefungen 12a, 12b, 12c wiederum auch optimal in der mittleren Querrille 7 gehalten werden kann. Die Schnee-Schnee-Reibung kann also bei gutem Fräsverhalten verbessert werden. Gleichzeitig kann auch ohne eine Anbindung benachbarter mittlerer Profilblöcke 4a durch die nur sehr schmale Lamellenbreite B13 eine hohe Profilsteifigkeit für das Trockenbremsen erreicht werden.

### Bezugszeichenliste

- 1: Laufstreifen
- 2: Fahrzeugreifen
- 3: zentrale Umfangsrille
- 4: mittlere Profilblockreihe
- 4a: mittlerer Profilblock
- 4b: Einlaufkante des mittleren Profilblocks 4a
- 4c: Oberfläche des mittleren Profilblocks 4a
- 5: schulterseitige Umfangsrille
- 6: schulterseitige Profilblockreihe
- 6a: schulterseitiger Profilblock
- 7: mittlere Querrille
- 7a: zentralseitiges Ende der mittleren Querrille 7
- 7b: schulterseitiges Ende der mittleren Querrille 7
- 8: schulterseitige Querrille
- 9a, 9b: Rillenflanken der mittleren Querrille 7
- 9c: Rillengrund der mittleren Querrille 7
- 10a: zentralseitiger Endbereich der mittleren Querrille 7
- 10b: schulterseitiger Endbereich der mittleren Querrille 7
- 11: Erhebung
- 11a: laufstreifeninnenseitiges Erhebungsteil
- 11b: mittleres Erhebungsteil
- 11c: laufstreifenaußenseitiges Erhebungsteil
- 12a: erste Vertiefung
- 12b: zweite Vertiefung
- 12c: dritte Vertiefung
- 13: Lamelle
- 13a, 13b: Lamellenseitenwände
- 13c: Lamellengrund
- 14a: laufstreifeninnenseitige Deckfläche des laufstreifeninnenseitigen Erhebungsteils 11a
- 14b: mittlere Deckfläche des mittleren Erhebungsteils 11b
- 14c: laufstreifenaußenseitige Deckfläche des laufstreifenaußenseitigen Erhebungsteils 11c
- B13: Lamellenbreite
- C: Äquatorialebene
- E: Erstreckungsrichtung der Querrille R; 7
- P: Profilblockreihe
- PB: Profilblock
- Q: Querrichtung
- R: Querrille
- T: Rillentiefe des Rillengrundes 9c der Querrille R; 7
- T*: volle Profiltiefe
- TO: Basistiefe des Rillengrundes 9c der Querrille R, 7
- T13: Lamellengrundtiefe
- Ta: laufstreifeninnenseitige Rillentiefe
- Tb: mittlere Rillentiefe
- Tc: laufstreifenaußenseitige Rillentiefe
- U: Umfangsrichtung

## Patentansprüche

1. Fahrzeugreifen (2) mit einem Laufstreifen (1), wobei der Laufstreifen (1)
mindestens eine in Umfangsrichtung (U) verlaufende Profilblockreihe (P; 4, 6) aufweist, wobei die mindestens eine Profilblockreihe (P; 4, 6) durch Querrillen (R; 7, 8) in mehrere Profilblöcke (PB; 4a, 6a) unterteilt ist, wobei die Querrillen (R; 7, 8) jeweils angewinkelt zu einer Querrichtung (Q) in eine Erstreckungsrichtung (E) verlaufen,
wobei in der jeweiligen Querrille (R; 7, 8) eine Erhebung (11) aus mindestens zwei Erhebungsteilen (11a, 11b, 11c) angeordnet ist, wobei eine Rillentiefe (T) eines Rillengrundes (9c) der jeweiligen Querrille (R; 7, 8) im Bereich der Erhebung (11) gegenüber einer Basistiefe (T0) der jeweiligen Querrille (R; 7, 8) verringert ist, wobei die Erhebung (11) in Erstreckungsrichtung (E) der jeweiligen Querrille (R; 7, 8) eingeschnitten ist, so dass sich eine Lamelle (13) mit einem Lamellengrund (13c) auf einer Lammellengrundtiefe (T13) ausbildet, wobei sich die Lamelle (13) in Erstreckungsrichtung (E) über sämtliche Erhebungsteile (11a, 11b, 11c) der Erhebung (11) erstreckt,
**dadurch gekennzeichnet, dass**
die Erhebung (11) in Erstreckungsrichtung (E) der jeweiligen Querrille (R; 7, 8) zumindest ein laufstreifeninnenseitiges Erhebungsteil (11a) mit einer horizontal verlaufenden laufstreifeninnenseitigen Deckfläche (14a), ein mittleres Erhebungsteil (11b) mit einer horizontal verlaufenden mittleren Deckfläche (14c) und ein laufstreifenaußenseitiges Erhebungsteil (11c) mit einer horizontal verlaufenden laufstreifenaußenseitigen Deckfläche (14c) aufweist, und wobei
- sich über dem laufstreifeninnenseitigen Erhebungsteil (11a) eine laufstreifeninnenseitige Rillentiefe (Ta) ergibt,
- sich über dem mittleren Erhebungsteil (11b) eine mittlere Rillentiefe (Tb) ergibt, und
- sich über dem laufstreifenaußenseitigen Erhebungsteil (11c) eine laufstreifenaußenseitige Rillentiefe (Tc) ergibt ,
wobei die laufstreifeninnenseitige Rillentiefe (Ta), die mittlere Rillentiefe (Tb) und
die laufstreifenaußenseitige Rillentiefe (Tc) jeweils geringer als die Basistiefe (T0) der jeweiligen Querrille (R; 7, 8) sind, und
wobei die mittlere Rillentiefe (Tb) geringer als die laufstreifeninnenseitige Rillentiefe (Ta) und die laufstreifenaußenseitige Rillentiefe (Tc) ist,
so dass sich zu beiden Seiten des mittleren Erhebungsteils (11b) hin eine absteigende Flanke und eine ansteigende Flanke ausbildet zum Erhalten eines mehrfach abgestuften Rillengrundes (9c).

2. Fahrzeugreifen (2) nach Anspruch 1,
**dadurch gekennzeichnet, dass**
der Lamellengrund (13c) über sämtliche Erhebungsteile (11a, 11b, 11c) auf einer konstanten Lamellengrundtiefe (T13) verläuft.

3. Fahrzeugreifen (2) nach Anspruch 1 oder 2,
**dadurch gekennzeichnet, dass**
die Lamellengrundtiefe (T13) des Lamellengrundes (13c) zumindest 80% der Basistiefe (T0), vorzugsweise zumindest 90% der Basistiefe (T0), entspricht, insbesondere mit der Basistiefe (T0) identisch ist.

4. Fahrzeugreifen (2) nach Anspruch 3,
**dadurch gekennzeichnet, dass**
die Basistiefe (T0) zwischen 60% und 100%, bevorzugt zwischen 70% und 80 %, einer vollen Profiltiefe (T*) des Laufstreifens (1) entspricht.

5. Fahrzeugreifen (2) nach einem der vorhergehenden Ansprüche,
**dadurch gekennzeichnet, dass**
die Lamelle (13) die Erhebung (11) mittig teilt.

6. Fahrzeugreifen (2) nach einem der vorhergehenden Ansprüche,
**dadurch gekennzeichnet, dass**
eine Lamellenbreite (B13) der Lamelle (13) zwischen 0.5mm und 2mm beträgt, vorzugsweise zwischen 0.6mm und 0.8mm.

7. Fahrzeugreifen (2) nach einem der vorhergehenden Ansprüche,
**dadurch gekennzeichnet, dass**
die laufstreifeninnenseitige Rillentiefe (Ta) und die laufstreifenaußenseitige Rillentiefe (Tc) identisch sind.

8. Fahrzeugreifen (2) nach einem der vorhergehenden Ansprüche,
**dadurch gekennzeichnet, dass**
in Erstreckungsrichtung (E) zwischen den einzelnen Erhebungsteilen (11a, 11b, 11c) der Erhebung (11) jeweils in Umfangsrichtung (U) verlaufende nutartige Vertiefungen (12a, 12b, 12c) ausgebildet sind.

9. Fahrzeugreifen (2) nach einem der vorhergehenden Ansprüche,
**dadurch gekennzeichnet, dass**
die Lamelle (13) in Umfangsrichtung (U) durch parallel zueinander verlaufende Lamellenseitenwände (13a, 13b) begrenzt ist, die in Erstreckungsrichtung (E) der jeweiligen Querrille (R; 7, 8) über sämtliche Erhebungsteile (11a, 11b, 11c) verlaufen, wobei die Lamellenseitenwände (13a, 13b) nicht-planar sind und dreidimensional vertieft und hervorstehend ausgebildet sind.

10. Fahrzeugreifen (2) nach Anspruch 9,
**dadurch gekennzeichnet, dass**
die Lamellenseitenwände (13a, 13b) wiederholt dreidimensional vertieft und hervorstehend ausgebildet sind.

11. Fahrzeugreifen (2) nach einem der vorhergehenden Ansprüche,
**dadurch gekennzeichnet, dass**
die Querrillen (R; 7, 8) jeweils in einem Winkel von zwischen 30° und 55° angewinkelt zu der Querrichtung (Q) in die Erstreckungsrichtung (E) verlaufen, vorzugsweise parallel zueinander verlaufen.

12. Fahrzeugreifen (2) nach einem der vorhergehenden Ansprüche,
**dadurch gekennzeichnet, dass**
der Rillengrund (9c) der jeweiligen Querrille € in Erstreckungsrichtung € neben der Erhebung (11), insbesondere in schulteraußenseitiger Richtung, auf der Basistiefe (T0) verläuft.

13. Fahrzeugreifen (2) nach einem der vorhergehenden Ansprüche,
**dadurch gekennzeichnet, dass**
die Profilblockreihe (PB) eine mittlere Profilblockreihe (4) ist und die Querrillen € mittlere Querrillen (7) sind,
wobei der Laufstreifen (1) mindestens eine zentrale Umfangsrille (3) und schulterseitige Umfangsrillen (5) aufweist, wobei die schulterseitigen Umfangsrillen (5) in Querrichtung (Q) beidseitig versetzt zu der mindestens einen zentralen Umfangsrille (3) verlaufen,
wobei sich die mindestens eine zentrale Umfangsrille (3) benachbart zu einer Äquatorialebene € des Fahrzeugreifens (2) in Umfangsrichtung (U) erstreckt und zwischen der mindestens einen zentralen Umfangsrille (3) und der jeweiligen schulterseitigen Umfangsrille (5) jeweils die in Umfangsrichtung (U) verlaufende mittlere Profilblockreihe (4) angeordnet ist,
wobei die jeweilige mittlere Profilblockreihe (4) durch die mittleren Querrillen (7) in mittlere Profilblöcke (4a) unterteilt ist, wobei die mittleren Querrillen (7) jeweils angewinkelt zu der Querrichtung (Q) in die Erstreckungsrichtung € verlaufen und jeweils mit einem zentralseitigen Ende (7a) in die mindestens eine zentrale Umfangsrille (3) münden und mit einem schulterseitigen Ende (7b) in die jeweilige schulterseitige Umfangsrille (5) münden,
wobei in der jeweiligen mittleren Querrille (7) die eingeschnittene Erhebung (11) aus den mehreren Erhebungsteilen (11a, 11b, 11c) mit der Lamelle (13) angeordnet ist, wobei die Rillentiefe (T) des Rillengrundes (9c) der mittleren Querrille (7) im Bereich der Erhebung (11) gegenüber der Basistiefe (T0) der mittleren Querrille (7) verringert ist,
wobei die Erhebung (11) in einem zentralseitigen Endbereich (10a) der mittleren Querrille (7) angeordnet ist und sich der zentralseitige Endbereich (10a) an das zentralseitige Ende (7a) der mittleren Querrille (7) anschließt.

## Claims

1. Vehicle tyre (2) having a tread (1), wherein the tread (1) has at least one profile-block row (P; 4, 6) which extends in a circumferential direction (U), wherein the at least one profile-block row (P; 4, 6) is subdivided into multiple profile blocks (PB; 4a, 6a) by transverse channels (R; 7, 8), wherein the transverse channels (R; 7, 8) each extend in a direction of extent (E) at an angle to a transverse direction (Q),
wherein an elevation (11) made up of at least two elevation parts (11a, 11b, 11c) is arranged in the respective transverse channel (R; 7, 8), wherein a channel depth (T) of a channel bottom (9c) of the respective transverse channel (R; 7, 8) is reduced in relation to a base depth (T0) of the respective transverse channel (R; 7, 8) in the region of the elevation (11), wherein the elevation (11) is cut in the direction of extent (E) of the respective transverse channel (R; 7, 8) such that a lamella (13) with a lamella bottom (13c) at a lamella-bottom depth (T13) is formed, wherein the lamella (13) extends in the direction of extent (E) over all the elevation parts (11a, 11b, 11c) of the elevation (11),
**characterized in that**
the elevation (11) has in the direction of extent (E) of the respective transverse channel (R; 7, 8) at least a tread-inner-side elevation part (11a), with a horizontally extending tread-inner-side top surface (14a), a middle elevation part (11b), with a horizontally extending middle top surface (14b), and a tread-outer-side elevation part (11c), with a horizontally extending tread-outer-side top surface (14c), and wherein
- a tread-inner-side channel depth (Ta) is obtained above the tread-inner-side elevation part (11a),
- a middle channel depth (Tb) is obtained above the middle elevation part (11b), and
- a tread-outer-side channel depth (Tc) is obtained above the tread-outer-side elevation part (11c),
wherein the tread-inner-side channel depth (Ta), the middle channel depth (Tb) and the tread-outer-side channel depth (Tc) are each smaller than the base depth (T0) of the respective transverse channel (R; 7, 8), and
wherein the middle channel depth (Tb) is smaller than the tread-inner-side channel depth (Ta) and the tread-outer-side channel depth (Tc) such that a descending flank and an ascending flank are formed on both sides of the middle elevation part (11b) so as to obtain a channel bottom (9c) having multiple steps.

2. Vehicle tyre (2) according to Claim 1,
**characterized in that**
the lamella bottom (13c) extends at a constant lamella-bottom depth (T13) over all the elevation parts (11a, 11b, 11c).

3. Vehicle tyre (2) according to Claim 1 or 2,
**characterized in that**
the lamella-bottom depth (T13) of the lamella bottom (13c) corresponds to at least 80% of the base depth (T0), preferably at least 90% of the base depth (T0), in particular is identical to the base depth (T0).

4. Vehicle tyre (2) according to Claim 3,
**characterized in that**
the base depth (T0) corresponds to between 60% and 100%, preferably between 70% and 80%, of a full profile depth (T*) of the tread (1).

5. Vehicle tyre (2) according to one of the preceding claims,
**characterized in that**
the lamella (13) splits the elevation (11) centrally.

6. Vehicle tyre (2) according to one of the preceding claims,
**characterized in that**
a lamella width (B13) of the lamella (13) is between 0.5 mm and 2 mm, preferably between 0.6 mm and 0.8 mm.

7. Vehicle tyre (2) according to one of the preceding claims,
**characterized in that**
the tread-inner-side channel depth (Ta) and the tread-outer-side channel depth (Tc) are identical.

8. Vehicle tyre (2) according to one of the preceding claims,
**characterized in that**
groove-like depressions (12a, 12b, 12c) that in each case extend in the circumferential direction (U) are formed between the individual elevation parts (11a, 11b, 11c) of the elevation (11) in the direction of extent (E).

9. Vehicle tyre (2) according to one of the preceding claims,
**characterized in that**
the lamella (13) is delimited in the circumferential direction (U) by parallel lamella side walls (13a, 13b) which extend in the direction of extent (E) of the respective transverse channel (R; 7, 8) over all the elevation parts (11a, 11b, 11c), wherein the lamella side walls (13a, 13b) are non-planar and formed to be three-dimensionally recessed and projecting.

10. Vehicle tyre (2) according to Claim 9,
**characterized in that**
the lamella side walls (13a, 13b) are formed to be three-dimensionally recessed and projecting in a repeated manner.

11. Vehicle tyre (2) according to one of the preceding claims,
**characterized in that**
the transverse channels (R; 7, 8) each extend in the direction of extent (E), preferably parallel to one another, at an angle of between 30° and 55° to the transverse direction (Q).

12. Vehicle tyre (2) according to one of the preceding claims,
**characterized in that**
the channel bottom (9c) of the respective transverse channel extends at the base depth (T0) next to the elevation (11) in the direction of extent (E), in particular in the shoulder-outer-side direction.

13. Vehicle tyre (2) according to one of the preceding claims,
**characterized in that**
the profile-block row (PB) is a middle profile-block row (4) and the transverse channels are middle transverse channels (7),
wherein the tread (1) has at least one central circumferential channel (3) and shoulder-side circumferential channels (5), wherein the shoulder-side circumferential channels (5) extend so as to be offset from the at least one central circumferential channel (3) on either side in the transverse direction (Q),
wherein the at least one central circumferential channel (3) extends in the circumferential direction (U) adjacent to an equatorial plane of the vehicle tyre (2), and between the at least one central circumferential channel (3) and the respective shoulder-side circumferential channel (5) there is arranged the respective middle profile-block row (4) extending in the circumferential direction (U),
wherein the respective middle profile-block row (4) is subdivided into middle profile blocks (4a) by the middle transverse channels (7), wherein the middle transverse channels (7) each extend in the direction of extent (E) at an angle to the transverse direction (Q) and each open out at a central-side end (7a) into the at least one central circumferential channel (3) and open out at a shoulder-side end (7b) into the respective shoulder-side circumferential channel (5),
wherein the cut-in elevation (11) made up of the multiple elevation parts (11a, 11b, 11c) with the lamella (13) is arranged in the respective middle transverse channel (7), wherein the channel depth (T) of the channel bottom (9c) of the middle transverse channel (7) is reduced in relation to the base depth (T0) of the middle transverse channel (7) in the region of the elevation (11),
wherein the elevation (11) is arranged in a central-side end region (10a) of the middle transverse channel (7), and the central-side end region (10a) adjoins the central-side end (7a) of the middle transverse channel (7).

## Revendications

1. Pneu (2) pour véhicule avec une bande de roulement (1), la bande de roulement (1) comportant au moins une rangée de blocs profilés (P ; 4, 6) s'étendant dans la direction périphérique (U), l'au moins une rangée de blocs profilés (P ; 4, 6) étant divisée en plusieurs blocs profilés (PB; 4a, 6a) par des rainures transversales (R ; 7, 8), les rainures transversales (R ; 7, 8) s'étendant chacune selon un angle par rapport à une direction transversale (Q) dans une direction d'extension (E),
une élévation (11) composée d'au moins deux parties d'élévation (11a, 11b, 11c) étant disposée dans la rainure transversale (R ; 7, 8) respective, une profondeur de rainure (T) d'un fond de rainure (9c) de la rainure transversale (R ; 7, 8) respective étant réduite dans la zone de l'élévation (11) par rapport à une profondeur de base (T0) de la rainure transversale (R ; 7, 8) respective, l'élévation (11) étant entaillée dans la direction d'extension (E) de la rainure transversale (R ; 7, 8) respective, de telle sorte qu'une lamelle (13) avec un fond de lamelle (13c) se forme sur une profondeur de fond de lamelle (T13), la lamelle (13) s'étendant sur toutes les parties d'élévation (11a, 11b, 11c) de l'élévation (11) dans la direction d'extension (E),
**caractérisé en ce que**
l'élévation (11) comporte dans la direction d'extension (E) de la rainure transversale (R ; 7, 8) respective au moins une partie d'élévation côté intérieur de bande de roulement (11a) avec une surface supérieure côté intérieur de bande de roulement (14a) s'étendant horizontalement, une partie d'élévation centrale (11b) avec une surface supérieure centrale (14c) s'étendant horizontalement et une partie d'élévation côté extérieur de bande de roulement (11c) avec une surface supérieure côté extérieur de bande roulement (14c) s'étendant horizontalement, et
- une profondeur de rainure côté intérieur de bande de roulement (Ta) étant obtenue au-dessus de la partie d'élévation côté intérieur de bande de roulement (11a),
- une profondeur moyenne de rainure (Tb) étant obtenue au-dessus de la partie d'élévation centrale (11b), et
- une profondeur de rainure côté extérieur de bande de roulement (Tc) étant obtenue au-dessus de la partie d'élévation côté extérieur de bande de roulement (11c),
la profondeur de rainure côté intérieur de bande de roulement (Ta), la profondeur de rainure moyenne (Tb) et la profondeur de rainure côté extérieur de bande de roulement (Tc) étant chacune inférieures à la profondeur de base (T0) de la rainure transversale (R ; 7, 8) respective, et
la profondeur de rainure moyenne (Tb) étant inférieure à la profondeur de rainure côté intérieur de bande de roulement (Ta) et à la profondeur de rainure côté extérieur de bande de roulement (Tc) de telle sorte qu'un flanc descendant et un flanc montant sont formés des deux côtés de la partie d'élévation centrale (11b) pour obtenir un fond de rainure (9c) à plusieurs étages.

2. Pneu (2) pour véhicule selon la revendication 1,
**caractérisé en ce que**
le fond de lamelle (13c) s'étend sur toutes les parties d'élévation (11a, 11b, 11c) à une profondeur de fond de lamelle constante (T13).

3. Pneu (2) pour véhicule selon la revendication 1 ou 2,
**caractérisé en ce que**
la profondeur de fond de lamelle (T13) du fond de lamelle (13c) correspond à au moins 80 % de la profondeur de base (T0), de préférence à au moins 90 % de la profondeur de base (T0), et est en particulier identique à la profondeur de base (T0).

4. Pneu (2) pour véhicule selon la revendication 3,
**caractérisé en ce que**
la profondeur de base (T0) correspond entre 60 % et 100 %, de manière préférée entre 70 % et 80 %, d'une profondeur de profil complète (T*) de la bande de roulement (1).

5. Pneu (2) pour véhicule selon l'une des revendications précédentes,
**caractérisé en ce que**
la lamelle (13) divise l'élévation (11) au centre.

6. Pneu (2) pour véhicule selon l'une des revendications précédentes,
**caractérisé en ce que**
une largeur de lamelle (B13) de la lamelle (13) est comprise entre 0,5 mm et 2 mm, de préférence entre 0,6 mm et 0,8 mm.

7. Pneu (2) pour véhicule selon l'une des revendications précédentes,
**caractérisé en ce que**
la profondeur de rainure côté intérieur de bande de roulement (Ta) et la profondeur de rainure côté extérieur de bande de roulement (Tc) sont identiques.

8. Pneu (2) pour véhicule selon l'une des revendications précédentes,
**caractérisé en ce que**
des creux en forme de rainures (12a, 12b, 12c) s'étendant dans la direction périphérique (U) sont formés entre les différentes parties d'élévation (11a, 11b, 11c) de l'élévation (11) dans la direction d'extension (E).

9. Pneu (2) pour véhicule selon l'une des revendications précédentes,
**caractérisé en ce que**
la lamelle (13) est délimitée dans la direction périphérique (U) par des parois latérales de lamelle (13a, 13b) s'étendant parallèlement les unes par rapport aux autres, qui s'étendent sur toutes les parties d'élévation (11a, 11b, 11c) dans la direction d'extension (E) de la rainure transversale (R ; 7, 8) respective, les parois latérales de lamelle (13a, 13b) étant non planes et étant formées en creux et en saillie de manière tridimensionnelle.

10. Pneu (2) pour véhicule selon la revendication 9,
**caractérisé en ce que**
les parois latérales de lamelle (13a, 13b) sont formées de manière répétée en creux et en saillie de manière tridimensionnelle.

11. Pneu (2) pour véhicule selon l'une des revendications précédentes,
**caractérisé en ce que**
les rainures transversales (R ; 7, 8) s'étendent chacune sous un angle entre 30° et 55° par rapport à la direction transversale (Q) dans la direction d'extension (E), de préférence s'étendent parallèlement les unes aux autres.

12. Pneu (2) pour véhicule selon l'une des revendications précédentes,
**caractérisé en ce que**
le fond de rainure (9c) de la rainure transversale respective s'étend à côté de l'élévation (11) dans la direction d'extension (E), en particulier en direction d'un côté extérieur d'épaulement, sur la profondeur de base (T0).

13. Pneu (2) pour véhicule selon l'une des revendications précédentes,
**caractérisé en ce que**
la rangée de blocs profilés (PB) est une rangée de blocs profilés centrale (4) et les rainures transversales sont des rainures transversales centrales (7),
la bande de roulement (1) comportant au moins une rainure périphérique central (3) et des rainures périphériques côté épaulement (5), les rainures périphériques côté épaulement (5) s'étendant de manière décalée des deux côtés dans la direction transversale (Q) par rapport à une rainure périphérique centrale (3),
l'au moins une rainure périphérique centrale (3) s'étendant dans la direction périphérique (U) de manière adjacente par rapport à un plan équatorial du pneu (2) pour véhicule et la rangée de blocs profilés centrale (4) s'étendant dans la direction périphérique (U) étant disposée entre l'au moins une rainure périphérique centrale (3) et la rainure périphérique côté épaulement (5) respective,
la rangée de blocs profilés centrale (4) respective étant divisée en blocs profilés centraux (4a) par les rainures transversales centrales (7), les rainures transversales centrales (7) s'étendant chacune dans la direction d'extension (E) selon un angle par rapport à la direction transversale (Q) et débouchant chacune par une extrémité côté central (7a) dans l'au moins une rainure périphérique centrale (3) et débouchant par une extrémité côté épaulement (7b) dans la rainure périphérique côté épaulement (5) respective,
l'élévation entaillée (11) composée de plusieurs parties d'élévation (11a, 11b, 11c) avec la lamelle (13) étant disposée dans la rainure transversale centrale (7) respective, la profondeur de rainure (T) du fond de rainure (9c) de la rainure transversale centrale (7) étant réduite dans la zone de l'élévation (11) par rapport à la profondeur de base (T0) de la rainure transversale centrale (7),
l'élévation (11) étant disposée dans une zone d'extrémité côté central (10a) de la rainure transversale centrale (7), et la zone d'extrémité côté central (10a) se raccordant à l'extrémité côté central (7a) de la rainure transversale centrale (7).
